Europäisches Patentamt

European Patent Office

Office européen des brevets

(19)

(11) EP 0 704 916 B1

(12) **EUROPEAN PATENT SPECIFICATION**

(45) Date of publication and mention
of the grant of the patent:
**04.08.1999 Bulletin 1999/31**

(51) Int Cl.⁶: **H01L 41/09**

(21) Application number: **95114244.7**

(22) Date of filing: **11.09.1995**

(54) **Output-enlarged piezoelectric clamp device**

Piezoelektrische Klemmvorrichtung mit vergrösserter Bewegung

Dispositif de serrage piézoélectrique à mouvement amplifié

(84) Designated Contracting States:
**DE FR GB**

(30) Priority: **29.09.1994 JP 23514694**

(43) Date of publication of application:
**03.04.1996 Bulletin 1996/14**

(73) Proprietor: **NEC CORPORATION**
**Tokyo (JP)**

(72) Inventor: **Sano, Mitsunori**
**Minato-ku, Tokyo (JP)**

(74) Representative: **Glawe, Delfs, Moll & Partner**
**Patentanwälte**
**Postfach 26 01 62**
**80058 München (DE)**

(56) References cited:
**EP-A- 0 320 996**          **US-A- 5 270 984**

**Description**

## BACKGROUND OF THE INVENTION

### FIELD OF THE INVENTION

The invention relates to a piezoelectric clamp device provided with elongation enlarging mechanism by which elongation of a piezoelectric element is enlarged and an object is clamped between a pair of clampers utilizing the enlarged elongation of the piezoelectric element, and more particularly to a piezoelectric clamp device provided with elongation enlarging mechanism comprising a lever arm enlarging elongation of a piezoelectric element utilizing the principles of the lever and the fulcrum and a beam further enlarging the elongation enlarged by the lever arm utilizing the principle of buckling.

### DESCRIPTION OF THE RELATED ART

A piezoelectric clamp device is a device in which elongation of a piezoelectric element generated by a voltage applied to the piezoelectric element is transmitted to a pair of clampers for making the clampers open or close to thereby clamp an object between the clampers. A piezoelectric clamp device is divided into two groups: one belonging to a first group has a bimorph type piezoelectric element which is one of composite elements, such as one suggested in Japanese Unexamined Patent Public Disclosure No. 1-321170, and one belonging to a second group has a simple piezoelectric element such as a single plate type piezoelectric element and a laminated type piezoelectric element. The second type piezoelectric clamp device has an advantage of having a higher electrical and mechanical energy conversion efficiency than that of the first type piezoelectric clamp device.

However, the second type piezoelectric element has a demerit of smaller elongation than that of the first type piezoelectric element. Accordingly, a piezoelectric clamp device including the second type piezoelectric element as a driver has to have elongation enlarging mechanism for enlarging elongation of a piezoelectric element generated when a voltage is applied to the piezoelectric element. Such a piezoelectric clamp device having elongation enlarging mechanism has been suggested in Japanese Unexamined Patent Public Disclosures Nos. 5-305574, 1-198037 and 2-68942. All of the piezoelectric clamp devices suggested in the Disclosures include a lever arm for enlarging elongation of a piezoelectric element utilizing the principles of the lever and the fulcrum. In particular, the piezoelectric clamp device suggested in No. 5-305574 further includes a beam for further enlarging elongation of a piezoelectric element enlarged by the lever arm, utilizing the principle of buckling of a beam, in addition to a lever arm. Accordingly, the piezoelectric clamp device suggested in No. 5-305574 has a greater elongation enlargement ratio measured from a piezoelectric element to a distal end of clampers than that of the piezoelectric clamp devices suggested in the other two Disclosures, and hence provides greater opening and closing stroke of clampers.

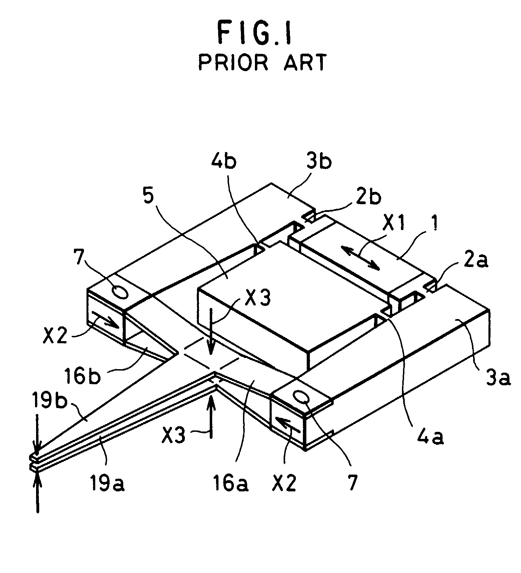

Fig. 1 illustrates the piezoelectric clamp device suggested in Japanese Unexamined Patent Public Disclosure No. 5-305574. In the illustrated piezoelectric clamp device, each of a pair of lever arms 3a and 3b is connected to a side of a substrate 5 through a first hinge 4a and 4b. Between one ends of the lever arms 3a and 3b is interposed a piezoelectric element 1 through second hinges 2a and 2b. Between the other ends of the lever arms 3a and 3b are bridged a pair of beams 16a and 16b. Each of the beams 16a and 16b is fixedly secured to the other ends of the lever arms 3a and 3b by means of rivets 7. Each of the beams 16a and 16b is provided at a central portion thereof with a clamper 19a and 19b which extends perpendicularly to and on a level with each of the beams 16a and 16b, respectively.

In operation, by applying a driver voltage to the piezoelectric element 1, the piezoelectric element 1 generates a strain or elongation in a direction indicated with an arrow X1. The thus generated elongation is transmitted to ends of the lever arms 3a and 3b through the second hinges 2a and 2b, and then enlarged by the principles of the lever and the fulcrum. In this case, the first hinges 4a and 4b of the lever arms 3a and 3b work as fulcrums. The thus enlarged elongation is transmitted to other ends of the lever arms 3a and 3b, thereby the lever arms 3a and 3b being displaced in a direction indicated with an arrow X2. The displacement of the other ends of the lever arms 3a and 3b causes buckling on the beams 16a and 16b to occur. Thus, the central portions of the beams 16a and 16b are displaced in a direction indicated with an arrow X3, that is, the beams 16a and 16b are displaced so that they come close to each other. As a result, the clampers 19a and 19b horizontally secured to the central portions of the beams 16a and 16b, respectively, come to contact with each other, thereby the clampers 19a and 19b closing. When application of a driver voltage to the piezoelectric element 1 is ceased, the elongation of the piezoelectric element 1 is no longer generated. Hence, the beams 16a, 16b and the lever arms 3a, 3b are displaced in a direction opposite to the directions X3 and X2, respectively, thereby the clamper 19a and 19b opening.

As mentioned above, since the piezoelectric clamp device illustrated in Fig. 1 includes the lever arm for enlarging elongation of the piezoelectric element, and further the beam for further enlarging the elongation enlarged by the lever arm utilizing the principle of buckling of a beam, the piezoelectric clamp device can provide greater open and close stroke to the clampers than that of the prior piezoelectric clamp devices having the lever arms only. According to the Disclosure No. 5-305574, by using as the piezoelectric element 1 a layer-laminated type piezoelectric element providing 7 µm elongation and also using elongation enlargement mechanism comprising lever arms and beams and having an enlargement ratio of 27, it is possible to obtain displacement of 190 µm in each of the clampers, and hence open and close stroke of 380 µm in the clampers.

As mentioned earlier, the Disclosure No. 5-305574 provides a piezoelectric clamp device which has a greater electrical and mechanical energy conversion efficiency, has a greater clamp force between the clampers, and further has greater stability in open and close stroke and clamp force than those of a piezoelectric clamp device having a bimorph type piezoelectric element. In addition, the piezoelectric damp device can have greater open and close stroke than that of the prior piezoelectric clamp devices having the lever arms only.

However, in the piezoelectric clamp device suggested in the Disclosure No. 5-305574, each of the clampers 19a and 19b extends horizontally from each of the beams 16a and 16b, respectively, that is, each of the clampers 19a and 19b extends perpendicularly to a direction in which the beams 16a and 16b generates displacement thereof. Hence, the displacement of each of the clampers 19a and 19b is equal to the displacement of each of the beams 16a and 16b. Thus, the open and close stroke of the clampers is determined only by an enlargement ratio of the elongation enlargement mechanism. In order to obtain greater open and dose stroke of the dampers, it is necessary to use a piezoelectric element providing longer elongation, apply a greater voltage to a piezoelectric element, or increase an enlargement ratio of the lever arms. However, these may deteriorate reliability and portability of a damp device. In addition, the piezoelectric clamp device illustrated in Fig. 1 needs the two beams 16a and 16b for enlarging the output displacement of the lever arms 3a and 3b. Hence, the piezoelectric clamp device cannot avoid from being complicated in structure, and in addition, since a load against elongation enlargement action of the lever arms is large, an elongation enlargement ratio provided by the lever arms has to be deteriorated.

## SUMMARY OF THE INVENTION

It is an object of the present invention to provide a piezoelectric damp device which increases an elongation enlargement ratio and thereby provides a greater open and close stroke of clampers than that of the prior piezoelectric damp devices.

This object is solved by a piezoelectric clamp device according to claim 1.

Advantageous embodiments of the invention are mentioned in the subclaims.

As having been described, the invention reduces the number of a beam to one (1) in a piezoelectric clamp device including lever arms for enlarging elongation of a piezoelectric element by the principles of the lever and fulcrum, beams for enlarging output displacement of the lever arms by the principle of buckling, and a pair of clampers which are secured to the beams and open and close in accordance with motion of the beams. The use of a single beam reduces a load to be exerted on the lever arms to thereby increase elongation of a piezoelectric element. Furthermore, by disposing the clampers so that the clampers extend at an angle from an axis along which buckling of the beam occurs, and open and close in a direction in which buckling of the beam occurs, the output displacement of the lever arms can be enlarged, and hence the open or close stroke of the clampers can be enlarged.

The open and close stroke of the dampers is adjusted as desired by appropriately determining a length of the clampers and an angle at which the dampers are attached to the beam. In addition, since a single beam is to be used, the structure of the piezoelectric clamp device can be made simple. The use of a lamination type piezoelectric element ensures a down-scaled damp device providing greater elongation than that of other type piezoelectric elements.

The above and other objects and advantageous features of the present invention will be made apparent from the following description made with reference to the accompanying drawings, in which like reference characters designate the same or similar parts throughout the drawings.

## BRIEF DESCRIPTION OF THE DRAWINGS

Fig. 1 is a perspective view illustrating a conventional piezoelectric clamp device having elongation enlargement mechanism.

Fig. 2 is a perspective view illustrating a piezoelectric clamp device in accordance with the first embodiment of the present invention.

Fig. 3 illustrates how the beam and the clampers displace of the first embodiment when a driver voltage is applied thereto (broken line) and when no driver voltage is applied thereto (solid line).

Fig. 4 illustrates a variation of the first embodiment illustrated in Fig. 2.

Fig. 5 is a perspective view illustrating a piezoelectric clamp device in accordance with the second embodiment of the present invention.

Fig. 6 illustrates how the beam and the clampers displace of the second embodiment when a driver voltage is applied thereto (broken line) and when no driver voltage is applied thereto (solid line).

## DESCRIPTION OF THE PREFERRED EMBODIMENTS

Preferred embodiments in accordance with the present invention will be explained hereinbelow with reference to drawings.

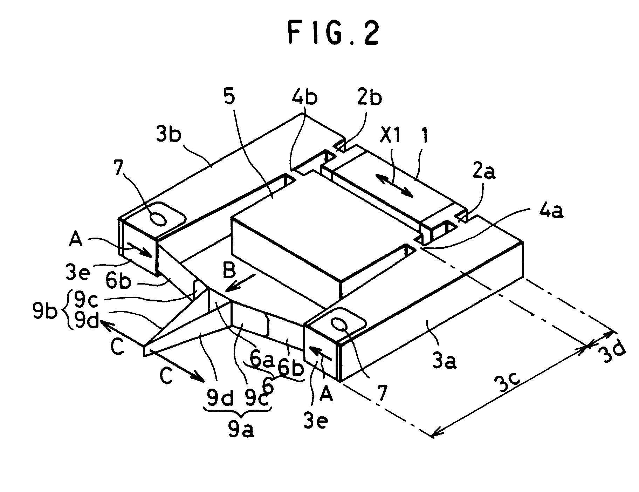

Fig. 2 illustrates a piezoelectric clamp device in accordance with the first embodiment of the present invention. A piezoelectric element 1, which generates elongation in accordance with a voltage applied thereto, is attached to thin T-shaped first hinges 2a and 2b at their flat surfaces through an adhesive such as epoxy resin. The first hinges 2a and 2b are connected to lever arms 3a and 3b. The first hinges 2a and 2b transmit elongation of the piezoelectric element 1 to the lever arms 3a and 3b. The lever arms 3a and 3b have thin second hinges 4a and 4b, respectively. The second hinges 4a and 4b are connected to a substrate 5 at its opposite sides. Each of the second hinges 4a and 4b partitions each of the lever arms 3a and 3b into a longer portion 3c and a shorter portion 3d. The above mentioned first hinges 2a and 2b are connected to the shorter portions 3d of the lever arms 3a and 3b. The second hinges 4a and 4b serve as fulcrums when the lever arms 3a and 3b work to transmit the elongation of the piezoelectric element 1 to a later mentioned beam 6. When the lever arms 3a and 3b transmit the elongation of the piezoelectric element 1 to the beam 6, the longer portions 3c of the lever arms 3a and 3b displaces in a direction indicated with an arrow A in Fig. 2. Namely, the lever arms 3a and 3b displaces so that they come close to each other. The first hinges 2a and 2b, the second hinges 4a and 4b, the lever arms 3a and 3b and the substrate 5 are integrally formed of high rigidity material such as SUS 304 and 42 Ni-Fe alloy.

Between ends of the longer portions 3c of the lever arms 3a and 3b is bridged a beam 6. The beam 6 is made of metal having resiliency such as phosphor bronze, and is formed by press-punching and bending. The beam 6 is fixed to the lever arms 3a and 3b through rivets 7.

The beam 6 is configured to be bent in a direction indicated with an arrow B in which buckling of the beam 6 occurs. Specifically, the beam 6 is composed of a strip which comprises a flat portion 6a disposed at the center thereof and in parallel with the direction A, and inclined portions 6b disposed at opposite sides of the flat portion 6a.

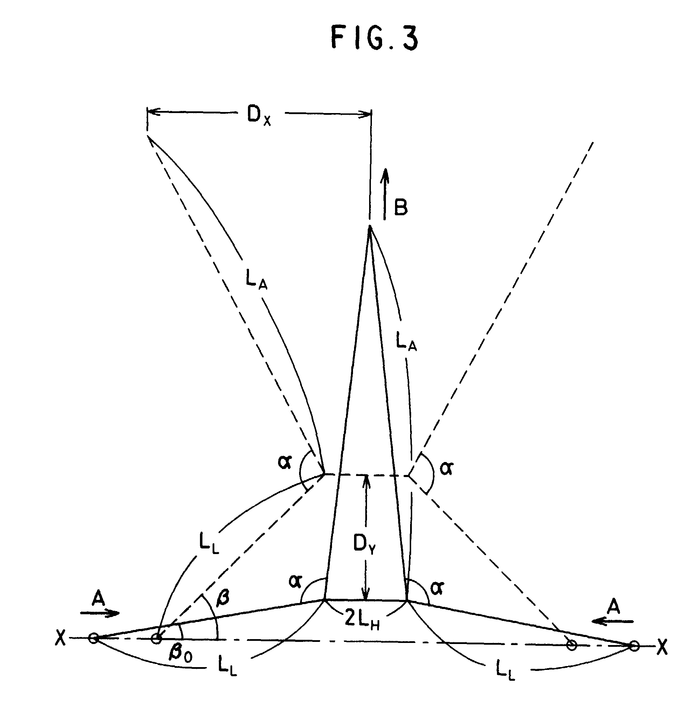

On the inclined portions 6b of the beam 6 are secured a pair of nearly L-shaped clampers 9a and 9b in facing relation. Each of the clampers 9a and 9b consists of a shorter portion 9c and a longer portion 9d. The clampers 9a and 9b are fixed to the inclined portions 6b of the beam 6 by an adhesive or welding. The longer portions 9d of the clampers 9a and 9b extend from the beam 6 in a direction almost the same as the direction B. The longer portions 9d forms an angle $\alpha$ with the shorter portions 9c and hence the beam 6 (see Fig. 3). In the illustrated embodiment, the angle $\alpha$ is determined to be greater than 90 degrees. Thus, as illustrated in Fig. 2, the clampers 9a and 9b comes to contact with each other at distal ends thereof.

In operation, a driver voltage is first applied to the piezoelectric element 1 to generate elongation in a direction indicated with an arrow X1. The elongation is transmitted to the lever arms 3a and 3b through the first hinges 2a and 2b. The lever arms 3a and 3b enlarges the thus transmitted elongation based on the principles of the lever and fulcrum wherein the second hinges 4a and 4b works as fulcrums. The thus enlarged elongation is output from the distal ends of the longer portions 3c of the lever arms 3a and 3b as swing displacement of the lever arms 3a and 3b, and is transmitted to the beam 6. The swing displacement of the lever arms 3a and 3b exerts compressive load longitudinally on the beam 6 through the opposite ends of the beam 6. As a result, the buckling of the beam 6 occurs in the direction B. Thus, the displacement of the distal ends of the longer portions 3c of the lever arms 3a and 3b is enlarged based on the principle of buckling of a beam, and transformed to displacement of the flat portion 6a of the beam 6 in the direction B.

As the beam 6 displaces in the direction B, distal ends of the clampers 9a and 9b fixed at the inclined portions 6b of the beam 6 displace in a direction indicated with an arrow C. Namely, the clampers 9a and 9b displace so that they part away from each other, or they open. Herein, the displacement of the clampers 9a and 9b corresponds to enlarged displacement of the flat portion 6a of the beam 6 in the direction B.

Fig. 3 illustrate motion of the beam 6 and the clampers 9a and 9b as viewed from the top. As illustrated with a solid line, the beam 6 and the clampers 9a, 9b do not generate any displacement when no driver voltage is applied to the piezoelectric element 1. On the other hand, as illustrated with a broken line, the beam 6 is displaced due to the buckling and accordingly the clampers 9a and 9b open when a driver voltage is applied to the piezoelectric element 1. When a driver voltage is applied to the piezoelectric element 1, the beam 6 is longitudinally compressed at opposite ends thereof in the direction A, and thus the flat portion 6a of the beam 6 is displaced in the direction B with a length thereof remaining unchanged. Herein, angles and lengths are defined as follows.

$L_L$: a length of the inclined portions 6b of the beam 6
$2L_H$: a length of the flat portion 6a of the beam 6
$\beta_0$: an angle formed between the inclined portions 6b of the beam 6 and an X axis when no driver voltage is applied to the piezoelectric element 1

$L_A$: a length of the longer portions 9d of the clampers 9a and 9b

$\alpha$: an angle formed between the longer portion 9d and the shorter portion 9c of the beam 6

$\beta$: an angle formed between the inclined portions 6b of the beam 6 and an X axis when a driver voltage is applied to the piezoelectric element 1

$D_Y$: a displacement of the flat portion 6a of the beam 6 in the direction B

$D_X$: a displacement of each of the distal ends of the longer portions 9d of the clampers 9a and 9b in the X axis direction

Thus, a ratio of the displacement $D_Y$ of the beam 6 to the displacement $D_X$ of the clamper 9a or 9b, namely, an enlargement ratio n of the clampers 9a and 9b is calculated by the following equation.

$$n = D_X/D_Y = [(\cos \beta - \cos \beta_0)(\cos \alpha)/(\sin \beta - \sin \beta_0) + \sin \alpha] \, L_A/L_L \qquad\qquad (A)$$

In this equation, the angles $\beta$ and $\beta_0$ are greater than 0 degrees but smaller than 90 degrees, namely, $0° \leq \beta_0 < \beta < 90°$. Thus, the following equations are established.

$\cos \beta < \cos \beta_0$, namely, $\cos \beta - \cos \beta_0 < 0$, and

$\sin \beta > \sin \beta_0$, namely, $\sin \beta - \sin \beta_0 > 0$

On the other hand, the angle $\alpha$ is greater than 90 degrees ($90° < \alpha$). Hence, now provided that the angle $\alpha$ is smaller than 180° ($\alpha < 180°$) and accordingly $90° < \alpha < 180°$, the following relations are established.

$\cos \alpha < 0$, $\sin \alpha > 0$

Accordingly, the right side of the equation (A) is always positive, and hence the displacement $D_X$ of the clampers 9a and 9b can be made greater than the displacement $D_Y$ of the beam 6 by appropriately designing the angel $\alpha$ and the lengths $L_A$ and $L_L$. In other words, the displacement $D_Y$ of the beam 6 can be further amplified by appropriately determining the dimensions of the clampers 9a and 9b.

As a driver voltage applied to the piezoelectric element 1 is lowered, the elongation of the piezoelectric element 1 is gradually decreased. Hence, the lever arms 3a, 3b and the beam 6 are displaced in a direction opposite to the above mentioned direction, resulting in that the clampers 9a and 9b are displaced so that they are closed. In accordance with the above mentioned motion of the clampers 9a and 9b, it is possible to clamp an object with the clampers 9a and 9b by applying a driver voltage to the piezoelectric element 1 to thereby open the dampers 9a and 9b, placing an object between the clampers 9a and 9b, and then lowering a driver voltage applied to the piezoelectric element 1.

In the embodiment, a layer-laminated type piezoelectric element was used as the piezoelectric element 1. The dimensions of the beam 6 was determined as follows.

$L_L$: 7.54 mm

$2L_H$: 2.00 mm

$\beta_0$: 6° 5' 19"

Under this specification, a driver voltage was applied to the piezoelectric element 1 to thereby obtain the elongation of 11 $\mu$m. The displacement $D_Y$ of the beam 6 was 0.30 mm. An enlargement ratio measured from the piezoelectric element 1 to the flat portion 6a of the beam 6 was 27. The angle $\beta$ formed between the inclined portions 6b of the beam 6 and the X axis was 8° 23' 9". When the length $L_A$ of the longer portions 9d of the clampers 9a and 9b was arranged to be 15.0 mm, and the angle $\alpha$ formed between the longer portion 9d and the shorter portion 9c of the clampers 9a and 9b was arranged to be 99° 54' 40", there was obtained the displacement $D_X$ of each of the distal ends of the clampers 9a and 9b, 0.60 mm. Thus, the enlargement ratio n obtained by the clampers 9a and 9b was calculated to be 2.0 (n = $D_X/D_Y$ = 0.60/0.30 = 2.0).

When the length $L_A$ was arranged to be 30 mm, and the angle $\alpha$ was arranged to be 97° 59' 56", there were obtained the enlargement ratio n of 4.0, and the displacement $D_X$ of 1.20 mm.

There was conducted an experiment in which the same piezoelectric element and lever arms as those of the embodiment were provided with the prior clamp device illustrated in Fig. 1, and the same driver voltage as that of the embodiment was applied to the piezoelectric element. The elongation of the piezoelectric element was 7 $\mu$m, and the displacement $D_X$ of each of the distal ends of the clampers 9a and 9b was 0.19 mm. This experimental results show that in the embodiment, the clampers 9a and 9b has a displacement-enlarged function with respect to the beam 6, and in addition, the elongation of the piezoelectric element 1 is enlarged. In the embodiment, since a only single beam is used, a load against the displacement-enlarged action of the lever arms 3a and 3b, namely a compressive force relative to the elongation of the piezoelectric element 1 is reduced to a half in comparison with a conventional piezoelectric clamp device. The increase of the elongation of the piezoelectric element 1 can be obtained due to the reduced load as above mentioned.

As having been described, the embodiment accomplishes a piezoelectric clamp device having three to six times greater open and close stroke of the clampers than that of a prior piezoelectric clamp device. By lengthen the lengths of the clampers 9a and 9b, there can be accomplished a piezoelectric clamp device having further greater open and close stroke of clampers. Since a voltage to be applied to the piezoelectric element 1 is in general in proportion to the elongation of the piezoelectric element 1, the displacement $D_X$ of the distal ends of the clampers 9a and 9b and a clamp force with which an object is to be clamped can be adjusted to minute degree by controlling a voltage to be applied to the piezoelectric element 1. The piezoelectric clamp device may be attached to a robot hand, for instance, and used as a manipulator. The piezoelectric clamp device can be used for operation in which minute objects are to be dealt with in an evil environment such as high temperature, and irritating and hazardous gas.

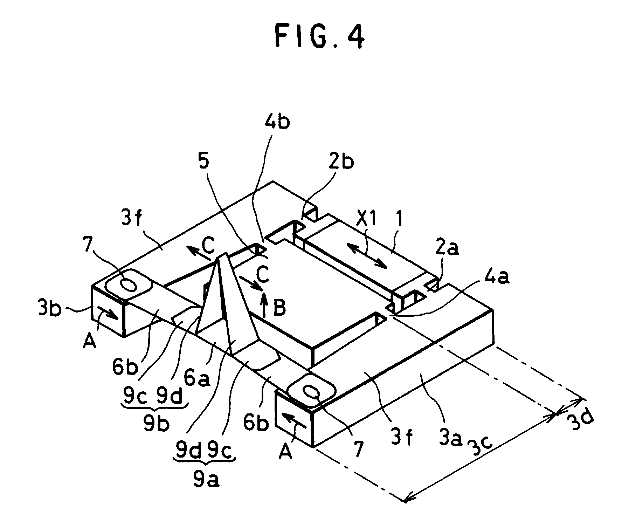

Fig. 4 illustrates a variation of the above mentioned embodiment. In the embodiment illustrated in Figs. 2 and 3, the beam 6 extend in the same plane as that of a front surface 3e of the lever arms 3a and 3b, and as a result the longer portions 9d of the clampers 9a and 9b extend horizontally. However, the beam 6 may extend so that the longer portions 9d of the clampers 9a and 9b extend upwardly or downwardly. Fig. 4 illustrates the piezoelectric damp device having the beam 6 extend in the same plane as that of a top surface 3f of the lever arms 3a and 3b, and as a result the longer portions 9d of the dampers 9a and 9b extend upwardly. The piezoelectric clamp device illustrated in Fig. 4 has the same performance as that of the device illustrated in Fig. 2.

The beam 6 may be secured to the lever arms 3a and 3b so that the longer portions 9d of the clampers 9a and 9b extend inwardly of the piezoelectric clamp device, if the lever arms 3a and 3b are long enough to avoid interference of the longer portions 9d of the clampers 9a and 9b with the substrate 5.

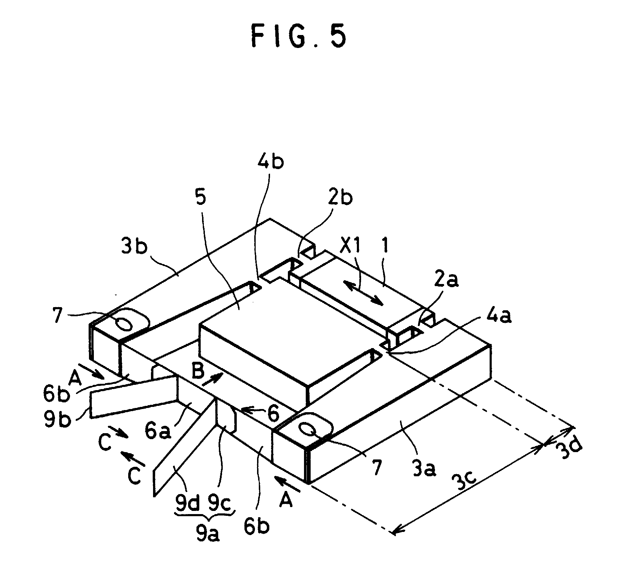

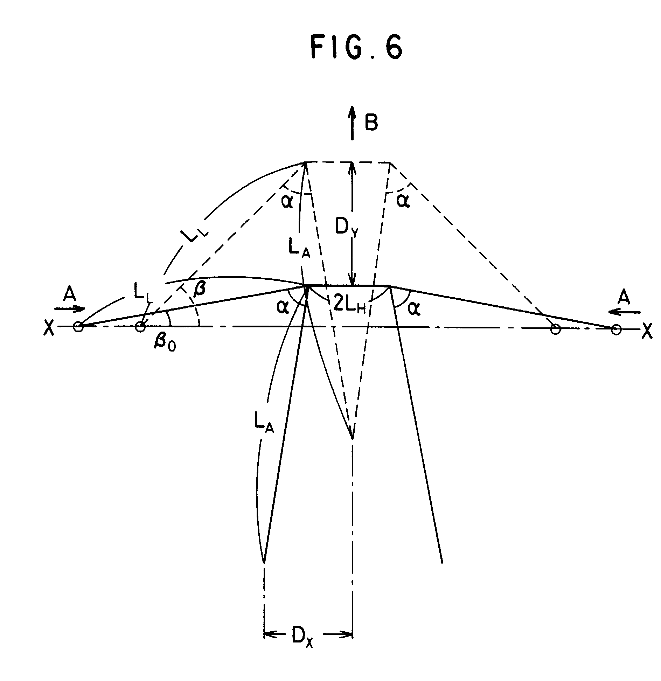

Figs. 5 and 6 illustrate a piezoelectric clamp device in accordance with the second embodiment of the present invention. The piezoelectric clamp device in accordance with the second embodiment is different from the first embodiment in the structure of the beam 6 and the clampers 9.

In the second embodiment, the beam 6 is configured to be bent in a direction opposite to a direction indicated with an arrow B in which buckling of the beam 6 occurs. The clampers 9a and 9b are secured to the inclined portions 6b of the beam so that the clampers 9a and 9b extend in the direction B similarly to the first embodiment. However, the angle $\alpha$ formed between the longer portions 9d and the shorter portions 9c and hence the beam 6 is determined to be smaller than 90 degrees unlike the first embodiment. Thus, as illustrated in Fig. 5, the clampers 9a and 9b are spaced away with each other at distal ends thereof.

Fig. 6 illustrate motion of the beam 6 and the clampers 9a and 9b as viewed from the top. As illustrated with a solid line, the beam 6 and the clampers 9a, 9b do not generate any displacement when no driver voltage is applied to the piezoelectric element 1. On the other hand, as illustrated with a broken line, the beam 6 is displaced due to the buckling thereof and accordingly the dampers 9a and 9b close when a driver voltage is applied to the piezoelectric element 1. When a driver voltage is applied to the piezoelectric element 1, the beam 6 is longitudinally compressed at opposite ends thereof in the direction A, and thus the flat portion 6a of the beam 6 is displaced in the direction B with a length thereof remaining unchanged.

In the second embodiment, the enlargement ratio obtained by the clampers 9a and 9b is determined in accordance with the equation (A).

$$n = D_X/D_Y = [(\cos \beta - \cos \beta_0)(\cos \alpha)/(\sin \beta - \sin \beta_0) + \sin \alpha] L_A/L_L \qquad (A)$$

As a driver voltage applied to the piezoelectric element 1 is lowered, the elongation of the piezoelectric element 1 is gradually decreased. Hence, the lever arms 3a, 3b and the beam 6 are displaced in a direction opposite to the above mentioned direction, resulting in that the clampers 9a and 9b are displaced so that they are open. In accordance with the above mentioned motion of the clampers 9a and 9b, it is possible to release an object which was clamped with the clampers 9a and 9b by applying a driver voltage to the piezoelectric element 1 to thereby clamp an object between the clampers 9a and 9b, and then lowering a driver voltage applied to the piezoelectric element 1.

Thus, the piezoelectric damp device in accordance with the second embodiment provides just the opposite motion to that of the first embodiment. Thus, the piezoelectric clamp device in accordance with the first or second embodiment may be used in accordance with necessity.

**Claims**

1.  A piezoelectric clamp device comprising:

    a piezoelectric element (1);
    a pair of arms (3a, 3b) hinged at opposite ends of the piezoelectric element (1) ;
    a substrate (5) hinged with opposite ends to the arms (3a, 3b);
    the arms (3a, 3b) and the substrate (5) enlarging an elongation of the piezoelectric element (1) in accordance with a voltage applied to the piezoelectric element (1) by the principles of lever and fulcrum;
    a single beam (6) connected with opposite ends (3e) to the arms (3a, 3b), the single beam (6) comprising a flat portion (6a) at the centre and inclined portions (6b) disposed at the opposite sides of the flat portion (6a), the inclined portions (6b) changing its angle with respect to the flat portion (6a) upon displacement of the arms (3a, 3b), and
    a pair of clampers (9a, 9b) attached to the single beam (6) in facing relation, each of the clampers (9a, 9b) forming an angle ($\alpha$) with each of the inclined portions (6b) of the single beam (6) for opening and/or closing in accordance with relative motion of the flat and inclined portions (6a, 6b) of the single beam (6), so as to further enlarge the elongation of the piezoelectric element (1).

2.  A piezoelectric clamp device as recited in claim 1 wherein the beam (6) is composed of a strip comprising the flat portion (6a) disposed at the center thereof and in parallel with the direction of elongation of the piezoelectric element (1) and the inclined portions (6b) disposed at opposite sides of the flat portion (6a), wherein each of the clampers (9a, 9b) is attached to each of the inclined portions (6b).

3.  A piezoelectric clamp device as recited in claim 1, wherein the angle ($\alpha$) is greater than 90 degrees when no voltage is applied to the piezoelectric element (1) so that said clampers (9a, 9b) contact each other at distal ends thereof.

4.  A piezoelectric clamp device as recited in claim 2, wherein the angle ($\alpha$) is smaller than 90 degrees when no voltage is applied to the piezoelectric element (1) so that said clampers (9a, 9b) do not contact each other at distal ends thereof.

5.  A piezoelectric clamp device as recited in claim 1, wherein each of the clampers (9a, 9b) is composed of a strip having a first portion (9d) and a second portion (9c), said second portion (9c) connecting the clamps (9a, 9b) to said beam (6), so as to form said angle ($\alpha$) between said first and second portions (9d, 9c) of each clamp (9a, 9b).

6.  A piezoelectric clamp device as recited in claim 1, further comprising a first and a second pair of hinges (4a, 4b; 2a, 2b) provided between said substrate (5) and said arms (3a, 3b) and said piezoelectric element (1) and said arms (3a, 3b), respectively.

7.  A piezoelectric clamp device as recited in claim 1, further comprising rivets (7) connecting said arms (3a, 3b) and said beam (6) at a distal end of the arms (3a, 3b).

8.  A piezoelectric clamp device as recited in claim 1, wherein said substrate (5) is connected to said arms (3a, 3b) between the connection points of said piezoelectric element (1) and said arms (3a, 3b) and the connection points of said beam (6) and said arms (3a, 3b), so that the portion of said arms (3a, 3b) between said substrate (1) and said piezoelectric element (1) is smaller than a portion of said arms (3a, 3b) between said substrate (1) and said beam (6).

**Patentansprüche**

1.  Piezoelektrische Klammervorrichtung mit:

    einem piezoelektrischen Element (1);
    einem Paar Armen (3a, 3b), die an entgegengesetzten Enden des piezoelektrischen Elements (1) angelenkt sind;
    einem Substrat (5), das mit entgegengesetzten Enden an die Arme (3a, 3b) angelenkt ist;
    wobei die Arme (3a, 3b) und das Substrat (5) ein Ausdehnen des piezoelektrischen Elements (1) in Übereinstimmung mit einer an das piezoelektrische Element (1) angelegten Spannung mittels des Prinzips von Hebel- und Wiederlager vergrößern;
einem einzelnen Träger (6), der mit entgegengesetzten Enden (3e) mit den Armen (3a, 3b) verbunden ist, wobei der einzelne Träger (6) in der Mitte einen flachen Abschnitt (6a) und an entgegengesetzten Enden des flachen Abschnitts (6a) angeordnete geneigte Abschnitte (6b) aufweist, wobei die geneigten Abschnitte (6b) ihren Winkel in Bezug auf den flachen Abschnitt (6a) bei Verschiebung der Arme (3a, 3b) ändern; und einem Paar Klammern (9a, 9b), die an dem einzelnen Träger (6) in einander gegenüberliegender Beziehung angebracht sind, wobei jede der Klammern (9a, 9b) einen Winkel ($\alpha$) mit jedem der geneigten Abschnitte (6b) des einzelnen Trägers (6) bildet, um in Übereinstimmung mit der relativen Bewegung der flachen und geneigten Abschnitte (6a, 6b) des einzelnen Trägers (6) sich zu öffnen und zu schließen, um so weiter das Ausdehnen des piezoelektrischen Elements (1) zu vergrößern.

2. Piezoelektrische Klammervorrichtung nach Anspruch 1, bei der der Träger (6) aus einem Streifen gebildet ist, der in der Mitte und parallel zu der Ausdehnrichtung des piezoelektrischen Elements (1) den flachen Abschnitt (6a) aufweist, und der die geneigten Abschnitte (6b) an entgegengesetzten Enden des flachen Abschnitts (6a) aufweist, wobei jede der Klammern (9a, 9b) mit einem der geneigten Abschnitte (6b) verbunden ist.

3. Piezoelektrische Klammervorrichtung nach Anspruch 1, bei der der Winkel ($\alpha$) größer als 90° ist, wenn keine Spannung an dem piezoelektrische Element (1) anliegt, so daß die Klammern (9a, 9b) an ihren distalen Enden miteinander in Kontakt stehen.

4. Piezoelektrische Klammervorrichtung nach Anspruch 2, bei der der Winkel ($\alpha$) kleiner als 90° ist, wenn keine Spannung an das piezoelektrische Element (1) anliegt, so daß die Klammern (9a, 9b) an ihren distalen Enden nicht miteinander in Kontakt stehen.

5. Piezoelektrische Klammervorrichtung nach Anspruch 1, bei der jede der Klammern (9a, 9b) aus einem Streifen mit einem ersten Abschnitt (9d) und einem zweiten Abschnitt (9c) gebildet ist, wobei der zweite Abschnitt (9c) die Klammer (9a, 9b) mit dem Träger (6) verbindet, um so den Winkel ($\alpha$) zwischen dem ersten und zweiten Abschnitt (9d, 9c) jeder Klammer (9a, 9b) zu bilden.

6. Piezoelektrische Klammervorrichtung nach Anspruch 1, die des weiteren ein erstes und ein zweites Gelenkpaar (4a, 4b; 2a, 2b) aufweist, das zwischen dem Substrat (5) und den Armen (3a, 3b) und zwischen dem piezoelektrischen Element (1) und den Armen (3a, 3b) vorgesehen ist.

7. Piezoelektrische Klammervorrichtung nach Anspruch 1, die des weiteren Nieten (7) aufweist, die die Arme (3a, 3b) und den Träger (6) am distalen Ende der Arme (3a, 3b) verbinden.

8. Piezoelektrische Klammervorrichtung nach Anspruch 1, bei der das Substrat (5) mit den Armen (3a, 3b) zwischen den Verbindungspunkten des piezoelektrischen Elements (1) und der Arme (3a, 3b) und zwischen den Verbindungspunkten des Trägers (6) und der Arme (3a, 3b) verbunden ist, wobei der Abschnitt der Arme (3a, 3b) zwischen dem Substrat (5) und dem piezoelektrischen Element (1) kleiner als der Abschnitt der Arme (3a, 3b) zwischen dem Substrat und dem Träger (6) ist.

**Revendications**

1. Dispositif de serrage piézoélectrique comprenant:

un élément piézoélectrique (1) ;
une paire de bras (3a, 3b) articulés à des extrémités opposées de l'élément piézoélectrique (1) ;
un substrat (5) articulé par les extrémités opposées aux bras (3a, 3b) ;
les bras (3a, 3b) et le substrat (5) amplifiant un allongement de l'élément piézoélectrique (1) en fonction d'une tension appliquée à l'élément piézoélectrique (1) suivant les principes du levier et de son point d'appui ;
une patte unique (6) raccordée par des extrémités opposées (3e) aux bras (3a, 3b), la patte unique (6) comprenant une partie plate (6a) au centre et des parties inclinées (6b) disposées sur les côtés opposés de la partie plate (6a), les parties inclinées (6b) faisant varier leur angle par rapport à la partie plate (6a) lors du déplacement des bras (3a, 3b), et
une paire de pinces de serrage (9a, 9b) assujetties à la patte unique (6) en relation de face à face, chacune des pinces de serrage (9a, 9b) formant un angle ($\alpha$) avec chacune des parties inclinées (6b) de la patte unique (6) en vue d'une ouverture et/ou d'une fermeture en fonction du mouvement relatif des parties plate et inclinées (6a, 6b) de la patte unique (6), de manière à amplifier davantage l'allongement de l'élément piézoélectrique (1).

2. Dispositif de serrage piézoélectrique selon la revendication 1, dans lequel la patte (6) se compose d'une bande comprenant la partie plate (6a) disposée en son centre et parallèlement à la direction de l'allongement de l'élément piézoélectrique (1) et les parties inclinées (6b) disposées sur les côtés opposés de la partie plate (6a), dans lequel chacune des pinces de serrage (9a, 9b) est assujettie à chacune des parties inclinées (6b).

3. Dispositif de serrage piézoélectrique selon la revendication 1, dans lequel l'angle ($\alpha$) est supérieur à 90 degrés lorsqu'aucune tension est appliquée à l'élément piézoélectrique (1), de sorte que lesdites pinces de serrage (9a, 9b) sont au contact l'une de l'autre à leur extrémité distale.

4. Dispositif de serrage piézoélectrique selon la revendication 2, dans lequel l'angle ($\alpha$) est inférieur à 90 degrés lorsqu'aucune tension est appliquée à l'élément piézoélectrique (1), de sorte que lesdites pinces de serrage (9a, 9b) ne sont pas au contact l'une de l'autre à leur extrémité distale.

5. Dispositif de serrage piézoélectrique selon la revendication 1, dans lequel chacune des pinces de serrage (9a, 9b) se compose d'une bande comportant une première partie (9d) et une seconde partie (9c), ladite seconde partie (9c) raccordant les pinces de serrage (9a, 9b) à ladite patte (6) de manière à former ledit angle ($\alpha$) entre lesdites première et seconde parties (9d, 9c) de chaque pince de serrage (9a, 9b).

6. Dispositif de serrage piézoélectrique selon la revendication 1, comprenant, en outre, une première et une seconde paire d'articulations (4a, 4b ; 2a, 2b) situées entre ledit substrat (5) et lesdits (3a, 3b) et ledit élément piézoélectrique (1) et lesdits bras (3a, 3b), respectivement.

7. Dispositif de serrage piézoélectrique selon la revendication 1, comprenant, en outre, des rivets (7) raccordant lesdits bras (3a, 3b) et ladite patte (6) à une extrémité distale des bras (3a, 3b).

8. Dispositif de serrage piézoélectrique selon la revendication 1, dans lequel ledit substrat (5) est raccordé auxdits bras (3a, 3b) entre les points de raccordement dudit élément piézoélectrique (1) et desdits bras (3a, 3b) et les points de raccordement de ladite patte (6) et desdits bras (3a, 3b), de sorte que la partie desdits bras (3a, 3b) entre ledit substrat (5) et ledit élément piézoélectrique (1) est plus petite qu'une partie desdits bras (3a, 3b) entre ledit substrat (5) et ladite patte (6).

# FIG.1
## PRIOR ART

# F I G. 2

# FIG. 3

# FIG. 4

# FIG. 5

# FIG.6